# EUROPEAN PATENT APPLICATION

(11) **EP 1 557 751 A2**
(43) Date of publication of application: **27.07.2005**
(21) Application number: 05001585.8
(22) Date of filing: 26.01.2005
(51) Int. Cl.: G06F 3/147

(54) **Mobile terminal apparatus and its information displaying method**

(30) Priority: 26.01.2004 JP 2004016666
(71) Applicant: NEC CORPORATION, Tokyo (JP)
(72) Inventor: Satou, Takashi, Minato-ku, Tokyo (JP)
(74) Representative: Betten & Resch

(57) **Abstract**

A mobile terminal apparatus, image data is sent from a CPU to a display controller in a normal operation mode, the image data is converted into RGB data by the display controller, and the RGB data is displayed on a display section. In a halt mode, halt image data is sent from the CPU to the display controller, the halt image data is converted into halt RGB data by the display controller; the halt RGB data is written in an image memory, and the halt RGB data is read out from the image memory and displayed on the display section.

## Description

### Background of the Invention

### 1. Field of the Invention

The present invention relates to a mobile terminal apparatus and a data displaying method.

### 2. Description of the Related Art

A mobile terminal apparatus such as a mobile phone, PHS (Personal Handy-phone System), PDA (Personal Digital Assistant) includes an electronic circuit configured from a plurality of semiconductor integrated circuits (ICs) and a display unit such as a liquid crystal display panel (LCD) as a data output unit. In the mobile terminal apparatus, it is important to accomplish lower power consumption such that a usage time of a battery is as long as possible through once charging operation is made possible, as well as the design of smaller size and lighter weight for excellent portability.

Various conventional techniques of the lower power consumption are proposed in which an electronic apparatus is driven by a built-in battery. For example, an power saving control technique of a display unit is known, which is composed of an LCD panel for displaying an image, a video RAM for storing image data on the LCD panel, and a controller for controlling the LCD panel and the video RAM.

By the way, in order to display a video image, an LCD display unit having an RGB (Red, Green, Blue) signal interface with an excellent display response has been used in many cases. However, since a conventional LCD display apparatus having the RGB signal interface does not have an image memory in the LCD display apparatus. Thus, CPU (Central Processing Unit) with large power consumption must always transmit image data. Hence, it is difficult to reduce the power consumption of the mobile phone and consequently extend the operation life of a built-in battery.

In conjunction with the above description, a display apparatus is disclosed in Japanese Laid Open Patent Application (JP-P2000-56740A). The display apparatus of this conventional example is composed of a LCD panel, a video RAM which stores image data, a cache memory which stores image data temporarily, and a controller which controls the LCD panel and the image data storage section. A current address is held until a next address is set.

Also, a digital image processing apparatus is disclosed in Japanese Laid Open Patent Application (JP-P2001-359091A). In this conventional example, a digital image decoding section decodes coded digital image data and outputs image data updating data. An image data transfer area control section specifies a part of the image data which is updated upon coding based on image data updating data and outputs a specified result. An image data transfer section the digital image data from the digital image decoding section to a LCD memory based on the specified result. The LCD memory stores the digital image data. By using the specified result, power consumption is reduced.

Also, a mobile terminal is disclosed in Japanese Laid Open Patent Application (JP-P2003-23490A). The mobile terminal of this conventional example is composed of a battery, a display section for displaying display data on a display area which can be changed in the size, and a control section controls the display section to change the size of the display area. When changing the display area small, the control section changes the size of image data which is already displayed.

Also, a display system is disclosed in Japanese Laid Open Patent Application (JP-P 2003-167558A). The display system of this conventional example is composed of a first storage circuit, a second storage circuit, a calculating circuit, and a display processing circuit. The first storage circuit stores and outputs first image data to the calculating circuit. The second storage circuit stores and outputs second image data to the calculating circuit. The calculation process circuit outputs the first image data to the display processing circuit, when the second image data is coincident with predetermined image data, and outputs the second image data to the display processing circuit when the second image data is not coincident with the predetermined image data. The display processing circuit forms a video signal from the first image data or the second image data.

A display apparatus is disclosed in Japanese Laid Open Patent Application (JP-P 2003-186445A). The display apparatus of this conventional example is composed of a video memory for at least one screen, a comparing section which compares current image data and previous image data in units of pixels, a counter which counts the number of pixels of the current image data which are same as those of the previous image data. The read section reads out the current image data from the video memory when the current image data and the previous image data are different, and holds the current image data for the count value when the current image data and the previous image data are coincident with each other in units of pixels.

Also, a display apparatus is disclosed in Japanese Laid Open Patent Application (JP-P 2003-195838A ). In this conventional example, a frame memory is formed on a substrate on which a pixel section is formed. By adopting such a structure, it is possible to read out image data for one line from the frame memory at a time, to supply to a drive circuit in parallel. Thus, serial transfer of the image data is not necessitated and circuits such as a parallel/serial conversion circuit and a serial output circuit, a serial/parallel conversion circuit and a parallel input circuit can be made omitted.

Also, an image display apparatus is disclosed in Japanese Laid Open Patent Application (JP-A-Heisei 6-59655). In the image display apparatus of this conventional example, an image generation section generates image data. An image storage section stores the image data. A first display section displays the image data stored in the image storage section on a display section. A detection section detects that the displayed image data is not changed during a predetermined time. When the displayed image data is not changed during the predetermined time, a function lowering section lowers or stop a part of the function of the image generation section. A second display section displays the image data stored in the image storage section on the display section when the function of the image generation section is lowered or stopped. A function recovery section returns the function of the image generation section to an original state, when the displayed image data should be changed.

Also, an image display apparatus is disclosed in Japanese Laid Open Patent Application (JP-A-Heisei 11-27698). In the image display apparatus of this conventional example, an image memory control section stores color image data with a predetermined resolution for one screen in an image memory by separating color component data from brightness component data. A display image generation section reads out the stored color component data and brightness component data from the image memory for every horizontal line, and generates a color display signal based on the read brightness component data and color component data to display the color image signal on a display section. In this case, the image memory control section stores for one screen in the image memory, the brightness component data of the color image data of pixels in a vertical direction and the color component data common to neighbor pixels to each of the pixels. The display image generation section contains a color component memory for storing a part of the color component data read out from the image memory for one horizontal line. An image data read section reads out the brightness component data stored in the image memory in the horizontal direction sequentially, reads out the color component data stored in the image memory corresponding to a concerned horizontal line, if the color component data of the concerned horizontal line is not stored in the color component memory. The image data read section reads out the color component data of the concerned horizontal line from the color component memory if the color component data of the concerned horizontal line is stored in the color component memory. A color component write section writes the color component data read out from the image memory in the color component memory. The color image signal is generated based on the color component data and the brightness component data read out every horizontal line by the image data read section and is displayed on the display section.

### Summary of the Invention

An object of the present invention is to provide a mobile terminal apparatus in which the power consumption of a LCD display apparatus with an RGB signal interface can be reduced, and its data displaying method.

In an aspect of the present invention, a method of displaying data in a mobile terminal apparatus, is achieved by sending image data from a CPU to a display controller in a normal operation mode; by converting the image data into RGB data by the display controller; by displaying the RGB data on a display section; by sending halt image data from the CPU to the display controller in a halt mode; by converting the halt image data into halt RGB data by the display controller; by writing the halt RGB data in an image memory; and by reading out the halt RGB data from the image memory and displaying the halt RGB data on the display section.

Here, the method may be achieved by further including updating a part of the halt RGB data when RGB data corresponding to image data sent from the CPU is different from the halt RGB data in the part; and displaying the updated halt RGB data on the display section.

Also, the method may be achieved by further including displaying a combination of the halt RGB data and the RGB data on the display section when a mode is changed from the halt mode to the normal operation mode.

Also, the image data sent from the CPU may be video image data.

In another aspect of the present invention, a mobile terminal apparatus includes a CPU section, a display section and a display controller. The CPU section sends image data in a normal operation mode and halt image data in a halt mode. The display section contains an image memory and a display panel. The display controller converts the image data into RGB data in the normal operation mode and controls the display section to display the RGB data on the display panel in the normal operation mode. The display controller converts the halt image data into halt RGB data, writes the halt RGB data in the image memory in the halt mode, and controls the display section to display the halt RGB data stored in the image memory on the display section in the halt mode.

Here, the display controller may update a part of the halt RGB data when RGB data corresponding to image data sent from the CPU is different from the halt RGB data in the part in the halt mode.

Also, the display controller may display a combination of the halt RGB data and the RGB data on the display section when a mode is changed from the halt mode to the normal operation mode.

Also, the image memory may have a capacity for a plurality of the RGB data.

Also, the image data sent from the CPU may be video image data.

### Brief Description of the Drawings

Fig. 1 is a block diagram showing a basic configuration of a mobile terminal apparatus according to the present invention; and
Fig. 2 is a detailed block diagram showing a portion related to the image display of the mobile terminal apparatus shown in Fig. 1.

### Description of the Preferred Embodiments

Hereinafter, a mobile terminal apparatus of the present invention will be described in detail with reference to the attached drawings.

### [First Embodiment]

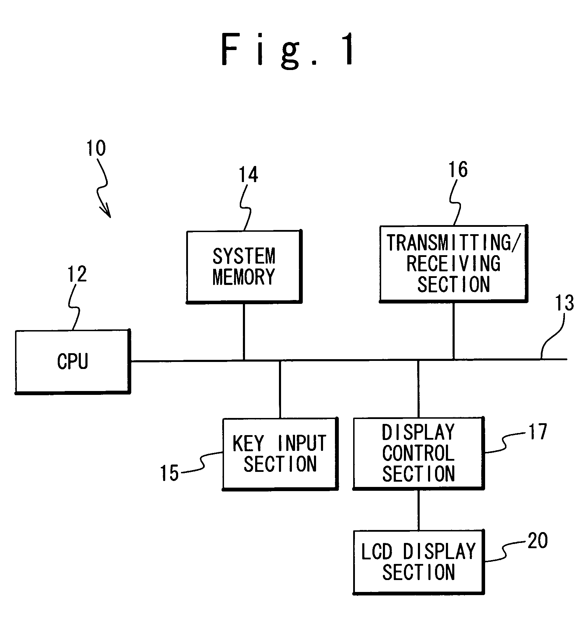

Fig. 1 is a block diagram showing a basic circuit configuration of the mobile terminal apparatus according to a first embodiment of the present invention. Referring to Fig. 1, the mobile terminal apparatus 10 is composed of a CPU (Central Processing unit) 12, a system memory 14, a key input section 15, a transmitting/receiving section 16, a display controller 17 and a LCD display section 20. The CPU 12, the system memory 14, the key input section 15, the transmitting/receiving section 16 and the display controller 17 are connected through a bus 13 to each other.

In the mobile terminal apparatus 10 shown in Fig. 1, the CPU 12 contains a memory or video RAM which can store image data and the like. The CPU 12 is connected through the bus 13 with the respective units or sections of the apparatus, and controls the operations of the respective units or sections in the apparatus. The system memory 14 stores various control programs to be executed by the CPU 12 and built-in data such as image and music, and is also used as a working area to hold those data temporarily. The key input section 15 receives key inputs from various keys operated by a user. The CPU sets a normal operation mode when a key operation exists during a predetermined time or the update of a display is necessitated although a key operation does not exist during a predetermined time, and a halt mode when a key operation does not exist during a predetermined time. The display controller 17 controls the LCD display section 20. The transmitting/receiving unit 16 wirelessly communicates with a counter end terminal through a base station (not shown). Specifically, the transmitting/receiving unit 16 transmits character data supplied from the key input section 15 and image data supplied from a camera connected through the bus 13, or receives such data from the counter end terminal. This transmitting/receiving unit 16 includes an antenna (not shown) for the wireless communication. The display controller 17 converts image data sent from the video RAM of the CPU 12 into RGB data which is sent to the LCD display section 20. The LCD display section 20 displays an image corresponding to the RGB data sent from the display controller 17.

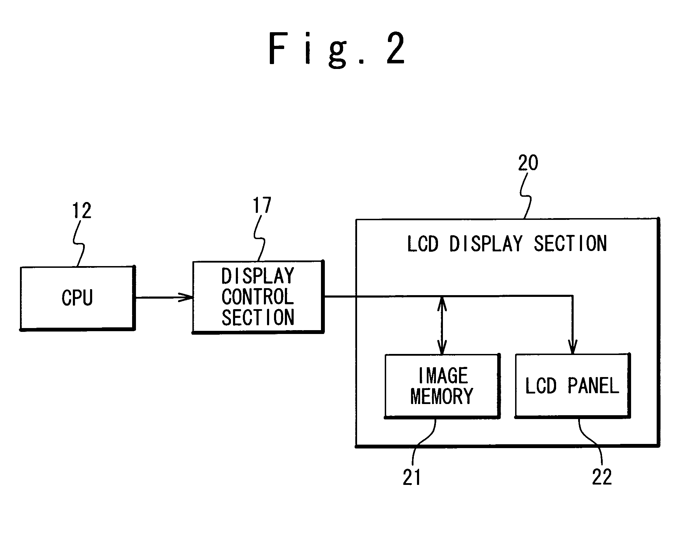

Next, Fig. 2 is a block diagram mainly showing the detailed configuration of the LCD display section 20 related to the data display. The LCD display section 20 is composed of an image memory 21 and a color liquid crystal display panel 22.

The LCD display section 20 displays the RGB data as the image data sent from the display controller 17 on the liquid crystal display panel 22. The display controller 17 can write the image data into the image memory 21 of the LCD display section 20. If the image data is not sent through the display controller 17 from the CPU 12, the image data stored in the image memory 21 in the LCD display section 20 is color-displayed on the liquid crystal display panel 22.

The operation of the mobile terminal apparatus 10 according to the present invention will be described below with reference to Figs. 1 and 2. Usually, the CPU 12 sends the image data to be displayed, through the display controller 17 to the LCD display section 20 in a normal operation mode, and the image data is color-displayed on the liquid crystal display panel 22. The display controller 17 converts the image data sent from the CPU 12 into the RGB data and sends as the RGB data to the LCD display section 20. Since the CPU 12 continues to send the image data to the LCD display section 20 through the display controller 17, a video image can be displayed excellently. In this way, when the mobile terminal apparatus 10 can be used as a TV telephone in a real time mode, the CPU 12 needs to continuously send the image data.

On the other hand, if the mobile terminal apparatus 10 is not operated by the user, the image data does not need to be updated. However, since the image on the liquid crystal display panel 22 cannot be erased, any display is required on the liquid crystal display panel 22 of the LCD display section 20. Thus, the CPU 12 continues to send the image data irrespectively of the presence or absence of the updated image. Consequently, the display response can be improved and the video image can be cleanly displayed. On the contrary, since a certain load is always impressed on the CPU 12, the CPU 12 cannot be halted, which disables the current consumption to be sufficiently reduced.

In the present invention, in order to stop he continuous transmission of the image data from the CPU 12, the image memory 21 is provided in the LCD display section 20. The CPU 12 writes a halt image in the image memory 21 through the display controller 17 in advance in a halt mode, i.e., when the user does not operate the mobile terminal apparatus 10 or the display is not necessitated. In the halt mode that the user does not operate the mobile terminal apparatus 10, the halt image data is sent from the image memory 21 to the liquid crystal display panel 22. Thus, the updating operation of the image data by the CPU 12 can be stopped, thereby halting the CPU.

Moreover, when the area where the image is updated is small, namely, when the image data sent from the CPU 12 is similar to the halt image stored in the image memory 21, and when the changed image data is small in amount, the display on the liquid crystal display panel 22 can be changed by updating only a part of the halt image stored in the image memory 21. Also, the increase in the memory capacity of the image memory 21 enables a plurality of image data to be stored as the halt image.

As mentioned above, the configuration and operation of the mobile terminal apparatus of the present invention have been described in detail. However, attention should be paid to the fact that the above-mentioned embodiment is the mere exemplification of the present invention and it does not limit the present invention at all. It could be easily understood that a skilled person in the art can perform various modifications depending on a particular usage field without departing from the spirit and scope of the present invention. For example, the increase in the size of the image memory, namely, the memory capacity enables the plurality of halt images to be held, and a combination of the plurality of halt images or a particular halt image and the image data from the CPU can be displayed on the liquid crystal panel.

## Claims

1. A method of displaying data in a mobile terminal apparatus, comprising:
sending image data from a CPU to a display controller in a normal operation mode;
converting said image data into RGB data by said display controller;
displaying said RGB data on a display section;
sending halt image data from said CPU to said display controller in a halt mode;
converting said halt image data into halt RGB data by said display controller;
writing said halt RGB data in an image memory; and
reading out said halt RGB data from said image memory and displaying said halt RGB data on said display section.

2. The method according to claim 1, further comprising:
updating a part of said halt RGB data when RGB data corresponding to image data sent from said CPU is different from said halt RGB data in the part; and
displaying said updated halt RGB data on said display section.

3. The method according to claim 1 or 2, further comprising:
displaying a combination of said halt RGB data and said RGB data on said display section when a mode is changed from said halt mode to said normal operation mode.

4. The method according to any of claims 1 to 3, wherein said image data sent from said CPU is video image data.

5. A mobile terminal apparatus comprising:
a CPU section configured to send image data in a normal operation mode and halt image data in a halt mode;
a display section having an image memory and a display panel; and
a display controller configured to convert said image data into RGB data in said normal operation mode and said halt image data into halt RGB data, to control said display section to display said RGB data on said display panel in said normal operation mode, to write said halt RGB data in said image memory in said halt mode, and to control said display section to display said halt RGB data stored in said image memory on said display section in said halt mode.

6. The mobile terminal apparatus according to claim 5, wherein said display controller updates a part of said halt RGB data when RGB data corresponding to image data sent from said CPU is different from said halt RGB data in the part in said halt mode.

7. The mobile terminal apparatus according to claim 5 or 6, wherein said display controller displays a combination of said halt RGB data and said RGB data on said display section when a mode is changed from said halt mode to said normal operation mode.

8. The mobile terminal apparatus according to any of claims 5 to 7, wherein said image memory has a capacity for a plurality of said RGB data.

9. The mobile terminal apparatus according to any of claims 5 to 8, wherein said image data sent from said CPU is video image data.
